# EUROPEAN PATENT APPLICATION

(11) **EP 2 437 380 A1**
(43) Date of publication of application: **04.04.2012**
(21) Application number: 10183634.4
(22) Date of filing: 30.09.2010
(51) Int. Cl.: H02K 7/102, H02K 7/18

(54) **Rotor, generator and wind turbine**

(71) Applicant: Siemens Aktiengesellschaft, 80333 München (DE)
(72) Inventor: Eriksen, Uffe, 8700, Horsens (DK); Stiesdal, Henrik, 5000, Odense C (DK)

(57) **Abstract**

A rotor (9) for a generator (7) of e.g. a wind turbine (1) includes an axis of rotation (5), a circular rotor body (10) and a circular stabilisation structure (12) arranged at a face side (11) of the rotor body (10), wherein the stabilisation structure (12) comprises a brake disc (14).

## Description

The invention relates to a rotor for a generator, a generator, and a wind turbine especially with a direct drive generator.

Two main types of wind turbines can be distinguished with regard to the drive configuration of the wind turbine. The first type represents the more classical type of a wind turbine comprising a gearbox arranged between a main shaft and a generator of the wind turbine. The second type is a gearless type, where the gearbox and the conventional generator are substituted by a multipolar generator, a so called direct drive or directly driven generator. Such a direct drive generator can be made as a synchronous generator with winded rotor or with permanent magnets attached to the rotor, or it can be designed as an alternative type of a generator.

Especially for outer rotor configurations the diameter of the rotor can reach several meters. Due to the size and the masses at the circumference (magnets or windings) rotors tend to deform during transportation and storage just because of gravity.

It is known to use temporary means for keeping the rotor in its shape. The means are mounted to the rotor prior to transportation or storage. Before the rotor is used or mounted to the generator the means are detached.

It is an object of the present invention to improve a rotor and handling of a rotor for a generator.

This object is solved by the features of claims 1, 11 and 13, respectively. The dependent claims offer further details and advantages of the invention.

In one aspect the invention is directed to a rotor for a generator including an axis of rotation, a circular rotor body and a circular stabilisation structure arranged at a face side of the rotor body, wherein the stabilisation structure comprises a brake disc. According to the invention the stabilisation structure has a dual function. On one hand it stabilizes the rotor during transportation, storage and mounting. On the other hand it provides a brake disc for the generator to which the rotor is mounted. This eases handling of the rotor because the stabilisation structure can stay with the rotor in use and further, it provides braking functionality. It also improves the quality of the rotor/generator as the rotor is at no time without support. A temporary support structure has to be removed at same point. The process of removal always entails the danger that the rotor has no support or sags to a support structure of the generator. The term brake disc includes also parts of brake discs or braking surfaces with another form. Most common for rotating rotors are discs, though. All parts of a brake disc which can accommodate a braking surface fall under the general term brake disc.

The brake disc may extend radially inward from a circumferential outer portion of the stabilisation structure. This configuration is ideal for an outer rotor generator. The largest diameter possible can be utilized for the brake disc. This increases the braking power.

The brake disc may include an axial extension. The brake disc can extend completely or in part in an axial direction. This stabilisation structure can be used for generators having brake pads or shoes with an axial braking surface like for example drum brakes.

The rotor body may include a flange and the flange may include the brake disc. A flange allows an easy realisation of the invention. The flange can be part of the stabilisation structure as well.

Two stabilisation structures may be arranged at both face sides of the rotor body which enhances stability of the rotor and increases braking power.

A support cylinder may support the stabilisation structure at its circumference. The support cylinder may envelope the complete rotor body or part of it. The support cylinder may protrude at the face side of the rotor body so that the brake disc is axially spaced from the rotor body.

Support stays spaced along the circumference of the rotor body may support the stabilisation structure. Using some support stays which can be mounted to the face side or the circumference of the rotor body can support the stabilisation structure in a straightforward manner.

The stabilisation structure may be non-detachably mounted to the rotor body. As there is no need to remove the stabilisation structure for use of the rotor it can be mounted permanently to the body of the rotor which can be more inexpensive. In that case it is possible to have the brake disc of the stabilisation structure attached removably.

The stabilisation structure may include an opening in its face side. The opening can be used for servicing e.g. of an inner stator of the generator. The opening can have a lid to close it when the opening is not used.

The brake disc may comprise a number of segments which eases handling and manufacturing.

In a second aspect the invention is directed to a generator with a stator and a rotor as described above. The generator can be a direct drive generator. The generator may have an outer rotor configuration. The generator has the same advantages as the rotor.

The generator may include a brake system, wherein the brake system may include the brake disc and at least one frictional member for releasable engagement with the brake disc. As the brake system is part of the generator the whole unit can be easily mounted, refitted and maintained.

In a further aspect the invention is directed to a wind turbine which includes a rotor as described above and/or a generator as described above. The wind turbine may be of a direct drive type and may have an outer rotor configuration. A frictional member of the brake system may be attached to a part of the wind turbine, for example to a main shaft. The same advantages of the rotor and/or generator apply to the wind turbine.

The wind turbine may include a blade hub, wherein the generator is directly coupled with the blade hub. Here, no gearbox is used between the blade hub and the generator. The wind turbine has a direct drive configuration. A flange or spacer may be arranged between the hub and the generator.

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.
Fig. 1 illustrates a schematic view of a wind turbine with a rotor and generator according to the invention.
Fig. 2 illustrates a schematic side view of a rotor according to the invention.
Fig. 3 illustrates a schematic side view of a rotor according to the invention.
Fig. 4 illustrates a schematic side view of a generator of a wind turbine according to the invention.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

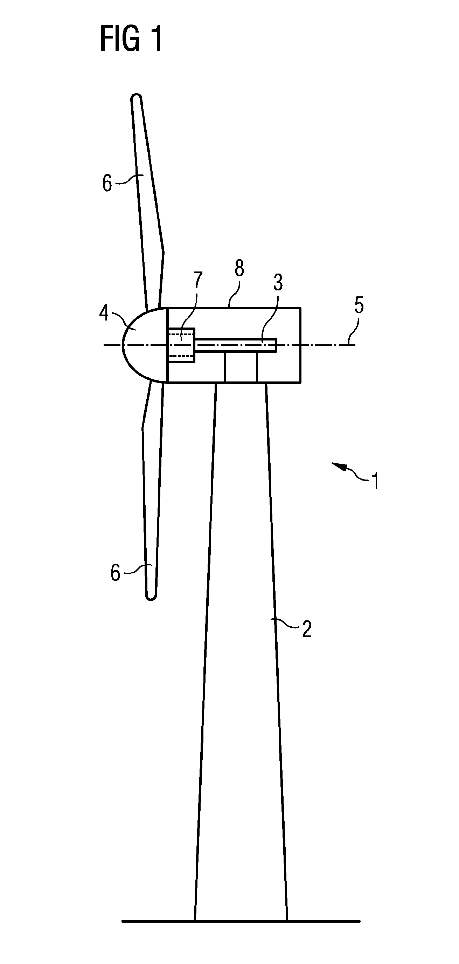

Figure 1 shows a wind turbine 1 with a tower 2 fixed to the ground. The tower 2 can have a height of hundred meters and more. On top of the tower 2 a main shaft 3 is fixed. A blade hub 4 is rotatively attached to the main shaft 3 and rotates around an axis of rotation 5 which is the centre axis of the main shaft 3. Blades 6 are attached to the blade hub 4. A direct-drive generator 7 is provided inside a nacelle 8 which surrounds the main shaft 3 and electrical equipment of the wind turbine 1.

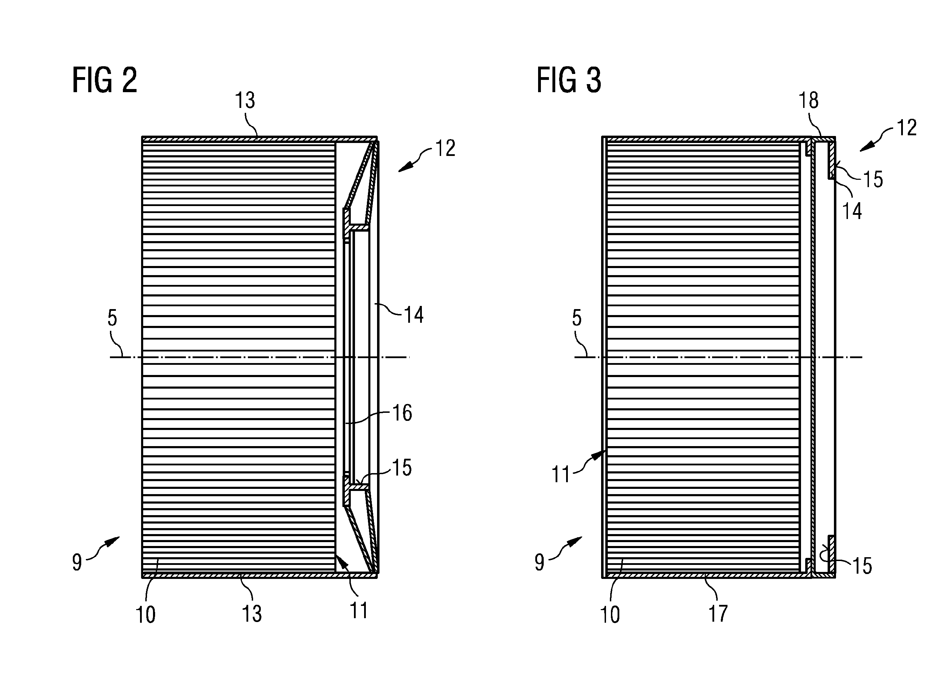

Figure 2 shows a rotor 9 with a cylindrical rotor body 10. A centre axis of the rotor 9 coincides with the axis of rotation 5 when the rotor 9 is mounted to the generator 7 of wind turbine 1. Along its circumference either permanent magnets or windings are arranged for the generator functionality. At a front side 11 of the rotor body 10 a circular or cylindrical stabilisation structure 12 is attached to the body 10. The stabilisation structure 12 stabilizes the rotor 9 to withstand gravity. The stabilisation structure 12 can be made of metal or other material which is suitable to keep the rotor 9 in its form.

Support stays 13 support the stabilisation structure 12 and transfer load from the rotor body 10 to the stabilisation structure 12. Two support stays 13 are shown for example. The real number of stays 13 depends for example on the weight of the rotor body 10 and/or the specifics of the generator 7. The support stays 13 extend along the complete axial length of the rotor body 10 and project above it at one side to accommodate the stabilisation structure 12. The length can be equal to the length of the rotor body 10. In that case the stabilisation structure 12 would be arranged directly at the face side 11 or inside or partly inside the rotor body 10. The support stays 13 do not necessarily need to extend the whole axial length of the rotor body 10. For example, they may extend form the stabilisation structure 12 only to the middle of the rotor body 10. The support stays 13 can be part of the stabilisation structure 12 and/or part of the rotor body 10.

The stabilisation structure 12 has in general a circular or disc form. Parts or the whole structure may extend in axial direction to a cylindrical form. The stabilisation structure 12 has a brake disc 14. The brake disc 14 can be integrally formed as shown or detachably mounted to the stabilisation structure 12.

A braking surface 15 of the brake disc 14 is ring shaped with the braking surface 15 being the inner surface of the ring. The diameter of the ring can be chosen depending on the specifics of the rotor 9, the generator 7 and/or the wind turbine 1. The braking surface 15 extends in axial direction, i.e. parallel to the axis of rotation 5.

The stabilisation structure 12 has a central opening 16 which can be used to service inner parts of the generator 7 like the stator. The opening 16 can be closed by a lid or the like when the opening 16 need not to be accessed. Here, one opening 16 is shown covering the central part completely. One or more smaller openings can be provided as well.

Figure 3 shows a rotor 9 similar to the one shown in Figure 2. The rotor body 10 has the same shape. The stabilisation structure 12 has a different design.

The stabilisation structure 12 is supported by a support cylinder 17 which envelops the circumference and one face side 11 of the rotor body 10. At the opposing face side the support cylinder 17 has a flange 18. The stabilisation structure 12 is attached to the flange 18 for example by means of bolts or screws. The stabilisation structure 12 has the form of a disc with a rim at the outer circumference wherein the rim extends in axial direction.

The brake disc 14 extends radially inwards from the rim. The brake disc 14 is fastened with screws or clamps (not shown) to the rim. The brake disc 14 has two braking surfaces 15 opposing each other in axial direction. The brake disc 14 may consist of several segments which may have the form of circle-segments.

Features of the rotors 9 shown in Figures 2 and 3 can be combined or exchanged. For example the opening 16 from Figure 2 can also be integrated into the rotor 9 shown in Figure 3.

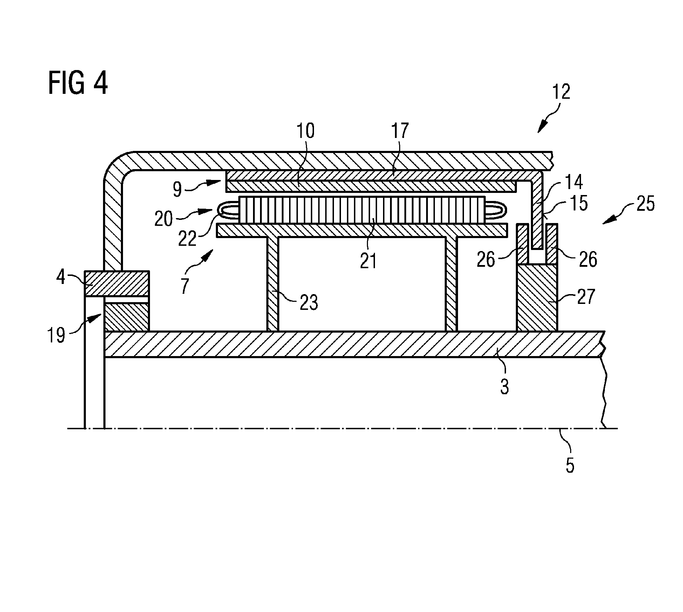

Figure 4 depicts the generator 7 as it is built into the wind turbine 1. The blade hub 4 is rotatively connected with the main shaft 3 via a main bearing 19. A stator 20 of the generator 7 has a lamination stack 21 to support windings 22. The stator 20 has the shape of a cylinder with the centre axis coinciding with the axis of rotation 5. The stator 20 is stationary connected to the main shaft 3 via a stator support structure 23.

A rotor support structure 24 is attached to the blade hub 4 or a mounting ring. The rotor support structure 24 has the form of a cylinder wherein a face side which is close to the hub 4 extends radially inwards to meet the hub 4. To an inner surface of an axial wall of the rotor support structure 24 the support cylinder 17 of the rotor 9 is attached. As shown in the previous Figures, the rotor body 10 is connected with the support cylinder 17 or the support stays 13 which can be used in Figure 4 as well. A small air gap in the range of a few millimetres extends between the rotor 9 and the stator 20.

At the end far from the hub 4 the brake disk 14 with its two radial braking surfaces 15 is arranged at the support cylinder 17 of the stabilisation structure 12. A brake system 25 of the generator 7 or the wind turbine 1 comprises the brake disc 14 and one or more frictional members 26 like a brake pad or brake shoe. Two frictional members 26 can be pressed at both braking surfaces 15 to decelerate the rotating blade hub 4 and the rotor 9. The frictional members 26 are supported by a brake support structure 27 which is fixed to the main shaft 3. The brake support structure 27 carries or includes brake pistons (not shown) for actuating the frictional members 26. Along the circumference of the main shaft 3 more than one brake support structure 27 may be arranged preferably with even spacing between them.

The stabilisation structure 12 is attached to the rotor body 10 during production and stays at the rotor body 10 during transportation, storage, mounting and use of the rotor 9. The stabilisation structure can be defined as part of the rotor 9. The brake disc 14 may be detached for repair, refitting and/or mounting of the rotor 9, the stator 20 or other parts of the generator 7.

## Claims

1. Rotor for a generator (7), comprising an axis of rotation (5), a circular rotor body (10) and a circular stabilisation structure (12) arranged at a face side (11) of the rotor body (10), wherein the stabilisation structure (12) comprises a brake disc (14).

2. Rotor for a generator (7) according to claim 1, wherein the brake disc (14) extends radially inward from a circumferential outer portion of the stabilisation structure (12).

3. Rotor for a generator (7) according to claim 1 or 2, wherein the brake disc (14) comprises an axial extension.

4. Rotor for a generator (7) according to one of claims 1 to 3, wherein the rotor body (10) comprises a flange and wherein the flange comprises the brake disc (14).

5. Rotor for a generator (7) according to one of claims 1 to 4, wherein two stabilisation structures (12) are arranged at both face sides (11) of the rotor body (10).

6. Rotor for a generator (7) according to one of claims 1 to 5, wherein a support cylinder (17) supports the stabilisation structure (12) at its circumference.

7. Rotor for a generator (7) according to one of claims 1 to 5, wherein support stays (13) spaced along the circumference of the rotor body (10) support the stabilisation structure (12).

8. Rotor for a generator (7) according to one of claims 1 to 7, wherein the stabilisation structure (12) is non-detachably mounted to the rotor body (10).

9. Rotor for a generator (7) according to one of claims 1 to 8, wherein the stabilisation structure (12) comprises an opening (16) in its face side.

10. Rotor for a generator (7) according to one of claims 1 to 9, wherein the brake disc (14) comprises a number of segments.

11. Generator with a stator (20) and a rotor (9) according to one of claims 1 to 10.

12. Generator according to claim 11, comprising a brake system (25), wherein the brake system (25) comprises the brake disc (14) and at least one frictional member (26) for releasable engagement with the brake disc (14).

13. Wind turbine (1) comprising a rotor according to claims 1 to 10 and/or a generator according to claim 11 or 12.

14. Wind turbine according to claim 13, comprising a blade hub, wherein the generator is directly coupled with the blade hub.

## Amended claims

### Amended claims in accordance with Rule 137(2) EPC.

**1.** Rotor for a generator (7), comprising an axis of rotation (5) and a circular rotor body (10),
**characterised by**
a circular transport stabilisation structure (12) arranged at a face side (11) of the rotor body (10), wherein the transport stabilisation structure (12) comprises a brake disc (14).

**2.** Rotor for a generator (7) according to claim 1, wherein
the brake disc (14) extends radially inward from a circumferential outer portion of the transport stabilisation structure (12).

**3.** Rotor for a generator (7) according to claim 1 or 2,
wherein the brake disc (14) comprises an axial extension.

**4.** Rotor for a generator (7) according to one of claims 1 to 3, wherein the rotor body (10) comprises a flange and wherein the flange comprises the brake disc (14).

**5.** Rotor for a generator (7) according to one of claims 1 to 4, wherein two transport stabilisation structures (12) are arranged at both face sides (11) of the rotor body (10).

**6.** Rotor for a generator (7) according to one of claims 1 to 5, wherein a support cylinder (17) supports the transport stabilisation structure (12) at its circumference.

**7.** Rotor for a generator (7) according to one of claims 1 to 5, wherein support stays (13) spaced along the circumference of the rotor body (10) support the stabilisation structure (12).

**8.** Rotor for a generator (7) according to one of claims 1 to 7, wherein the transport stabilisation structure (12) is non-detachably mounted to the rotor body (10).

**9.** Rotor for a generator (7) according to one of claims 1 to 8, wherein the transport stabilisation structure (12) comprises an opening (16) in its face side.

**10.** Rotor for a generator (7) according to one of claims 1 to 9, wherein the brake disc (14) comprises a number of segments.

**11.** Generator with a stator (20) and a rotor (9) according to one of claims 1 to 10, wherein the rotor (9) is attached to a rotor support structure (24).

**12.** Generator according to claim 11, comprising a brake system (25), wherein the brake system (25) comprises the brake disc (14) and at least one frictional member (26) for releasable engagement with the brake disc (14).

**13.** Wind turbine (1) comprising a rotor according to claims 1 to 10 and/or a generator according to claim 11 or 12.

**14.** Wind turbine according to claim 13, comprising a blade hub, wherein the generator is directly coupled with the blade hub.
